# FASCICULE DE BREVET EUROPEEN

(11) **EP 0 948 065 B1**
(45) Date de publication et mention de la délivrance du brevet: **04.06.2003**
(21) Numéro de dépôt: 98105760.7
(22) Date de dépôt: 30.03.1998
(51) Int. Cl.: H01M 2/12, H01M 2/06

(54) **Event de sécurité pour accumulateur ou pile**
Sicherheitsentlüftung für Akkumulator oder Batterie
Safety vent for accumulator or battery

(43) Date de publication de la demande: 06.10.1999
(73) Titulaire: Renata AG, 4452 Itingen (CH)
(72) Inventeur: Wyser, Paul Julian, 9050 Appenzell (CH)
(74) Mandataire: Thérond, Gérard Raymond

(56) Documents cités:
- EP-A- 0 144 757
- EP-A- 0 772 251
- US-A- 4 049 883
- US-A- 4 397 919
- PATENT ABSTRACTS OF JAPAN vol. 010, no. 113 (E-399), 26 avril 1986 -& JP 60 249241 A (MATSUSHITA DENKI SANGYO KK), 9 décembre 1985,
- PATENT ABSTRACTS OF JAPAN vol. 095, no. 003, 28 avril 1995 -& JP 06 333544 A (YUASA CORP), 2 décembre 1994, -& DATABASE WPI Derwent Publications Ltd., London, GB; AN 95-055272 XP002076928
- PATENT ABSTRACTS OF JAPAN vol. 007, no. 004 (E-151), 8 janvier 1983 -& JP 57 163965 A (SANYO DENKI KK), 8 octobre 1982,

## Description

La présente invention concerne un évent de sécurité pour accumulateur ou pile, sensible à une élévation anormale de la température. L'invention concerne notamment de tels accumulateurs ou piles de type lithium-ion.

Avec l'expansion des appareils portables qui exigent une grande densité d'énergie, tels que les téléphones mobiles, les caméras vidéo et autre appareils électroniques, on a cherché à développer des accumulateurs ou piles, désignés par la suite par le terme générique de "batterie", que la source d'énergie soit rechargeable ou non, ayant entre autres caractéristiques souhaitées une grande densité d'énergie tout en présentant, avec un coût le moins élevé possible, les garanties nécessaires du point de vue sécurité d'emploi, tant vis-à-vis de l'utilisateur que vis-à-vis des circuits électroniques contigus. Durant les dernières décennies, les batteries de type lithium-ion, qu'elles soient de forme bâton, bouton ou prismatique, ont connu un grand développement en raison de leur aptitude à fournir une grande densité d'énergie. Les perfectionnements à ce type de batteries ont porté tout autant sur le choix du meilleur couple faisant intervenir l'ion lithium que sur des dispositifs visant à améliorer leur sécurité d'emploi. En effet, lorsque la batterie est en circuit fermé avec une forte demande de courant, lors de la phase de charge pour les accumulateurs, ou lors d'un dysfonctionnement dû à un mauvais usage par exemple lors d'un usage ou d'un stockage à une température trop élevée, les réactions chimiques qui se produisent peuvent provoquer une décomposition partielle de l'électrolyte avec un dégagement gazeux entraînant une augmentation de la pression à l'intérieur du container de la batterie et une élévation de température, ce qui peut provoquer une explosion, voire une inflammation de ladite batterie. Pour remédier à cet inconvénient, la plupart des batteries sont équipées d'un dispositif de sécurité qui exploite cette pression interne, ou plus précisément qui déclenche ledit dispositif au delà d'un certain seuil de pression. A titre d'exemple, le document EP 0 554 535 divulgue un dispositif dans lequel la pression provoque l'ouverture d'une valve, normalement maintenue fermée par la pression mécanique exercée par une rondelle élastique. Dans le document US 4,943,497, le dispositif décrit consiste à provoquer la rupture des moyens de connexion entre les contacts extérieurs et le matériau actif à l'intérieur du container de la batterie.

De tels dispositifs font appel à des constructions mécaniques qui ont l'inconvénient d'accroître le coût du produit final.

Pour des batteries lithium-ion de grandes dimensions, divers dispositifs visent soit à dissiper la chaleur, tel le dispositif décrit dans le document EP 0 620 610 soit à l'utiliser pour faire fondre un bouchon disposé dans la paroi du container, tel le dispositif décrit dans le document US 4,232 796. Pour des batteries de petites dimensions destinées à des appareils portables incorporant des circuits électroniques fragiles, on comprend qu'un tel dispositif n'est pas satisfaisant étant donné qu'il n'est pas possible de confiner l'inévitable fuite d'électrolyte.

Le but de la présente invention est de pallier les inconvénients susmentionnés en procurant une batterie qui dispose d'un évent de sécurité autour d'un contact extérieur, sans pour autant augmenter le coût du produit final.

A cet effet l'invention a pour objet un évent de sécurité, sensible à une élévation anormale de température, pour une batterie comprenant un container métallique à l'intérieur duquel sont disposés des matériaux actifs formant respectivement l'anode et la cathode ledit container étant obturé à sa partie supérieure par un capot hermétiquement scellé, séparé des matériaux actifs par un élément isolant et supportant deux contacts reliés électriquement à l'anode et à la cathode par l'intermédiaire de moyens de connexion, caractérisé en ce qu'au moins un des contacts est formé au moins partiellement par une tige métallique rigide, montée avec un jeu annulaire dans un tube dont une partie de plus petit diamètre traverse l'élément isolant et le capot, et dont une partie de plus grand diamètre vient en appui sur la face interne de l'élément isolant, en ayant son autre extrémité sertie contre la face externe du couvercle et en ce que le jeu forme entre le tube et la tige est obturé par une composition thermofusible.

Lorsque la batterie est utilisée dans des conditions provoquant une élévation de température et de la pression interne présentant un risque d'explosion et d'inflammation des gaz accumulés, la composition thermofusible fond et permet la libération des gaz à travers le passage ménagé par le jeu qui existe initialement entre la tige et la partie de tube de plus petit diamètre. Selon des techniques connus de l'art antérieur, le gaz émis peut être confiné ou passivé pour supprimer tout risque d'inflammation. L'évent de sécurité selon l'invention peut également être complété par des dispositifs coupe-circuit lorsque la demande énergétique dépasse un seuil critique, tel qu'un circuit électronique intégré prolongeant un contact et permettant de contrôler l'état de charge/décharge de la batterie ainsi que toute sollicitation anormale en énergie susceptible de nuire à la sécurité d'emploi. La composition thermofusible est prévue pour fondre et libérer le passage lorsque la température atteint 100° à 150°, c'est-à-dire environ 120°. A cet effet on peut utiliser des mélanges eutectiques connus de métaux choisis parmi le bismuth, le cadmium, l'étain, l'indium et le plomb.

Le sertissage du tube sur le couvercle est de préférence effectué en interposant une rondelle isolante entre le capot et la partie de tube sertie, ce qui permet d'isoler électriquement le contact extérieur du capot, à condition d'avoir ménagé un espace annulaire entre ledit capot et le tube. Afin de renforcer l'étanchéité de la batterie lorsqu'elle est utilisée dans un état de fonctionnement normal, il peut en outre être avantageux de prévoir un joint d'étanchéité disposé dans un logement ménagé dans le capot et permettant l'écrasement dudit joint entre le capot, l'élément isolant et le tube lors de l'opération de sertissage.

Il est également possible, et économiquement préférable, de réaliser en même temps l'isolation électrique et l'étanchéité au moyen d'une seule pièce à la fois isolante et élastique. Cette pièce comprend une partie tubulaire disposé entre le capot et le tube, prenant appui sur l'élément isolant par l'une de ses extrémités et ayant son autre extrémité prolongée par une extension annulaire formant rondelle.

La connexion électrique entre un contact pourvu d'un tel évent et une électrode située à l'intérieur de la batterie peut être effectuée avec des conducteurs souples selon les techniques connues de l'art antérieur.

Selon deux modes de réalisation préférés, la tige ou le tube peuvent également former les moyens de connexion avec les électrodes.

Selon un premier mode de réalisation le tube est limité à une douille dont l'épaulement forme une collerette prenant appui sur la face interne de l'élément isolant, la tige de connexion étant prolongée à l'intérieur de la batterie au-delà de l'élément isolant pour être soudée sans contact intermédiaire aux électrodes.

Selon un deuxième mode de réalisation la tige de connexion ne s'étend pas au-delà de l'élément isolant et la partie de tube de plus grand diamètre est prolongée à l'intérieur de la batterie pour être soudées aux électrodes. Pour permettre une libre circulation des gaz, le tube est pourvu d'une ouverture dans sa partie de plus grand diamètre, à proximité de l'épaulement.

Selon l'un ou l'autre des modes de réalisation, les parties de tige ou de tube s'étendant à l'intérieur de la batterie sont aplatis, au moins partiellement pour faciliter le soudage des électrodes dans une production en série.

L'évent de sécurité selon l'invention peut être utilisé dans tout type de batterie. Toutefois selon un mode de réalisation préféré l'élément isolant sur lequel la collerette de la douille prend appui est le plateau supérieur d'une bobine supportant un enroulement de type "jelly roll", c'est-à-dire un enroulement spiral non circulaire de bandes composites , contenant l'anode et la cathode. Dans ce mode de réalisation la bobine comprend également un plateau inférieur relié au plateau supérieur par trois isthmes définissant deux ouvertures permettant de loger dans la portion comprise entre les deux plateaux les portions de tige formant les moyens de connexion. L'invention concerne également une batterie pourvue d'un évent de sécurité selon l'invention, et plus particulièrement une batterie prismatique à enroulement de type "jelly roll" bobiné.

D'autres caractéristiques et avantages de la présente invention apparaîtront dans la description suivante en référence aux dessins annexés dans lesquels.
- la figure 1 est une vue schématique en coupe d'un évent de sécurité selon l'invention.
- la figure 2 est une vue en coupe d'une première variante de réalisation d'un évent de sécurité selon l'invention.
- la figure 3 est une vue en coupe d'une deuxième variante de réalisation d'un évent de sécurité selon l'invention.
- la figure 4 est une vue en coupe d'une troisième variante de réalisation d'un évent de sécurité selon l'invention.
- la figure 5 est une vue en perspective éclatée d'une batterie prismatique pourvue d'une évent de sécurité selon l'invention.

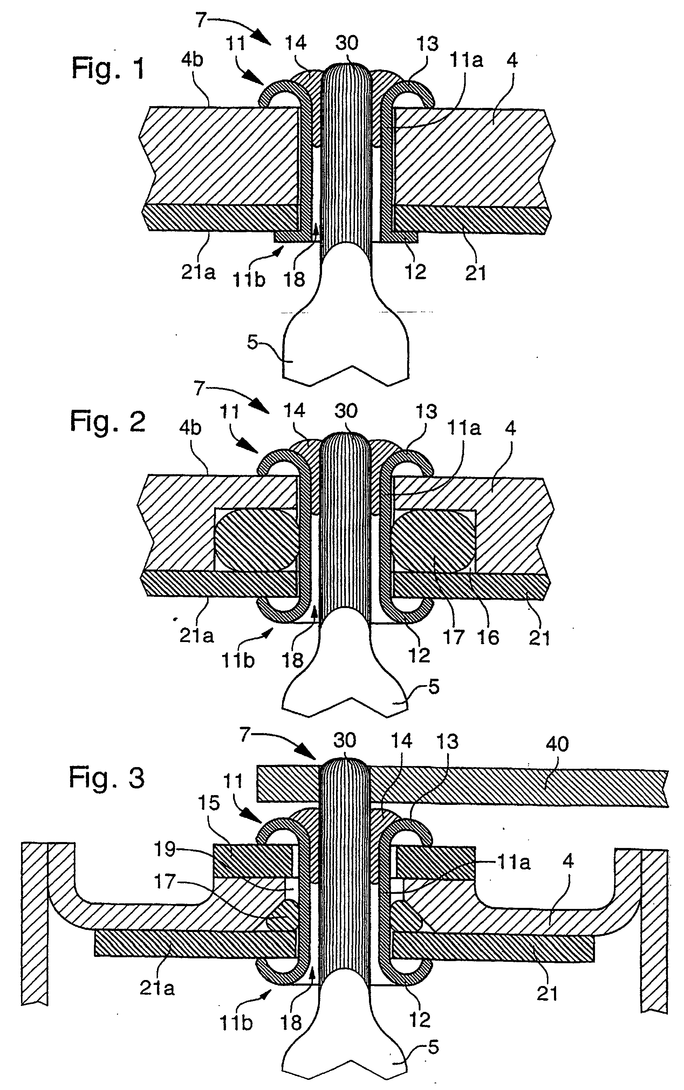

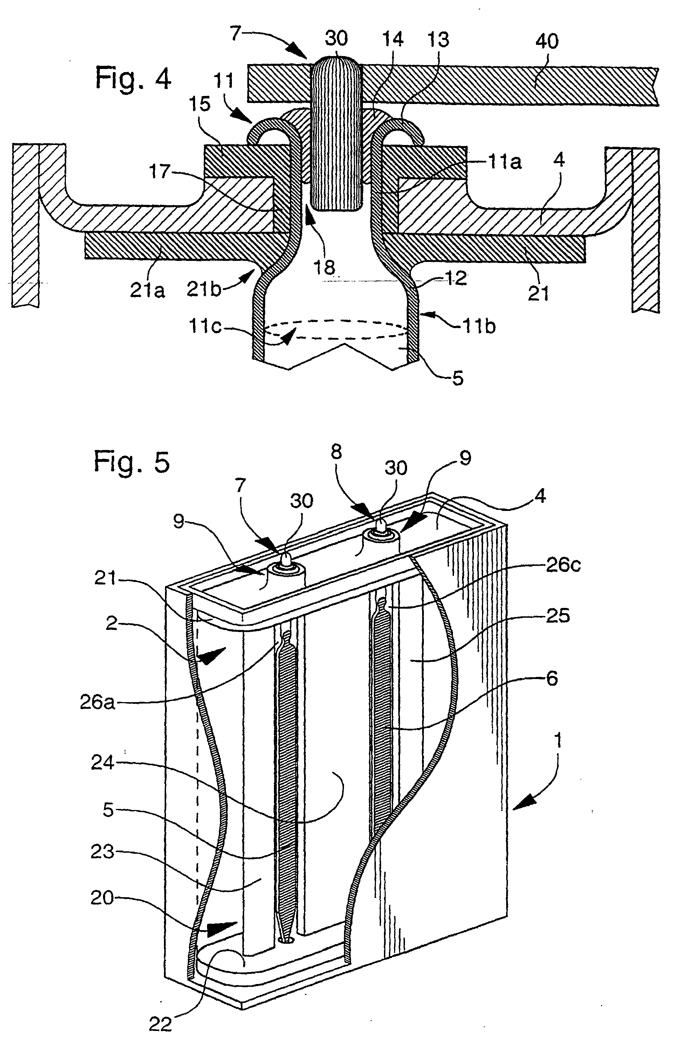

A la figure 1 on a représenté uniquement la partie de batterie comprenant l'évent de sécurité. La partie supérieure correspond à un capot 4 métallique devant être soudé dans l'ouverture du container 1 de la batterie (non représenté sur cette figure, mais visible sur la figure 5. En dessous de ce capot 4 est disposé un élément isolant 21 ayant sensiblement la même surface que le capot 4, ledit élément isolant étant réalisé de préférence en un matériau plastique déformable. L'élément isolant 21 et le capot 4 sont percés d'un trou destiné à recevoir un tube 11 dont une partie de plus petit diamètre 11a traverse l'élément isolant 21 et le capot 4 et dont l'autre partie de plus grand diamètre 11b est limitée à une collerette 12 prenant appui sur la face interne 21a de l'élément isolant 21. L'autre extrémité 13 du tube 11 est rabattue par sertissage contre la face externe 4b, du capot. Le tube 11 est traversé par l'extrémité d'une tige métallique 30 reliée directement ou indirectement à une électrode de la batterie. La tige 30 a un diamètre inférieur au diamètre intérieur du tube 11 de sorte qu'ont ait un jeu annulaire 18 entre les parois internes du tube 11 et le corps de la tige 30. Ce jeu annulaire 18 est obturé de l'extérieur par un cordon d'une composition thermofusible 14 de façon à rendre le container de la batterie hermétique en état de fonctionnement normal. La composition thermofusible 14 est de préférence un mélange eutectique de métaux choisis parmi l'étain, le bismuth, le plomb, le cadmium et l'indium; et dont le point de fusion est compris entre 100° et 150°. De telles compositions sont disponibles dans le commerce par exemple chez Metallwerke Goslar GmbH & Co. KG - Allemagne. A titre d'exemple on peut utiliser une composition comprenant 27 % de cadmium et 73 % d'indium ayant un point eutectique de 123°C.

Dans l'exemple qui vient d'être décrit, on voit d'une part qu'il existe un pont électrique entre le capot 4 et la tige 30, d'autre part que l'étanchéité de la batterie dépend encore d'un bon ajustement entre le diamètre du trou pratiqué à travers le capot 4 et le diamètre extérieur du tube 11. Les variantes de construction proposées aux figures 3 et 4 permettent de supprimer le pont électrique et de renforcer l'étanchéité.

A la figure 2 on voit que le capot 4 comporte un évidemment annulaire 16 ouvert vers l'intérieur du container de la batterie. Avant de mettre en place le couvercle 4 et de procéder à l'opération de sertissage, on met autour de la douille 11 un joint 17, de section telle qu'il assure par écrasement l'étanchéité entre le capot 4, l'élément isolant 21 et le corps extérieur du tube. Dans le mode de réalisation représenté aux figures 2 et 3, on observera également que la collerette 12 peut avoir la forme d'un bourrelet comparable à celui obtenu à l'autre extrémité de la douille par sertissage.

Comme représenté à la figure 3, il peut être utile ou nécessaire que le contact 7 formé par l'extrémité de la tige 30 soit totalement isolé électriquement du capot 4. A cet effet le capot 4 présente, par rapport au tube 11, un jeu annulaire 19 et l'isolement électrique est obtenu par une rondelle isolante 15 interposée entre le capot 4 et le bourrelet de sertissage 13. On observera également que l'évidement 16 formé dans le capot 4 pour recevoir le joint torique 17 a une forme tronconique, ce qui contribue également à améliorer l'étanchéité de la batterie. Sur la figure 3 on a aussi représenté un circuit électronique intégré 40 permettant de renforcer la sécurité d'utilisation en contrôlant l'état de charge/décharge, ainsi que toute sollicitation anormale en énergie pouvant provoquer une augmentation de la pression et/ou de la température.

Dans les exemples qui viennent d'être décrit en référence aux figures 1 à 3, on voit que le tube 11 ne s'étend pas à l'intérieur de la batterie et peut être assimilé à une douille dont l'extrémité située à l'extérieure de la batterie est rabattue par sertissage contre le capot 4. Dans un mode de réalisation préféré, la tige 30 s'étend au contraire à l'intérieur de la batterie pour former un moyen de connexion 5 (respectivement 6) en étant de préférence aplatie sur toute sa longueur, cela est visible sur la figure 5, de façon à rendre plus facile le soudage des électrodes par exemple composée par des bandes composites de matériaux actifs.

En ce référant maintenant au mode de réalisation représenté à la figure 4, on voit au contraire que la tige 30 a une longueur juste nécessaire pour pouvoir disposer un cordon de composition thermofusible 14. Par contre, la partie de plus grand diamètre 11b s'étend à l'intérieur de la batterie pour former un moyen de connexion 5 (respectivement 6) et comporte un l'épaulement 12 en appui contre la surface interne 21a de l'élément isolant 21. Comme précédemment la partie de tube 11b qui s'étend à l'intérieur de la batterie peut être écrasée pour faciliter le soudage des électrodes, tout en laissant libre un passage 11c suffisant pour l'évacuation des gaz depuis la partie basse du tube vers le jeu annulaire 18.

L'épaulement 12, qui prend appui sur l'élément isolant 21, peut provenir de la jonction entre les deux parties d'un tube initialement conformé avec une partie de petit diamètre 11a et une partie de plus grand diamètre llb. Il est également possible d'utiliser un tube ayant initialement un diamètre uniforme correspondant au plus petit diamètre 11a, l'épaulement 12 étant alors obtenu contre au moins une partie de l'ouverture pratiquée dans l'élément isolant 21 par l'écrasement du tube qui provoque son ovalisation. On observera que cette ovalisation peut entraîner une déformation 21b de l'ouverture pratiquée dans l'élément isolant 21, déformation tout à fait possible compte tenu du matériau utilisé pour ledit élément isolant 21. On observe également que la rondelle isolante 15 et le joint 17 forme une seule pièce, réalisé en un matériau à la fois isolant et élastique, tel que le polypropylène pour assurer à la fois l'isolation électrique et l'étanchéité. Le joint 17 a alors une forme tubulaire s'étendant sur toute la longueur de percement du capot 4.

A la figure 5 on a représenté une batterie prismatique à enroulement spiral non circulaire 2, dit de type "jelly roll", schématiquement représenté par le trait pointillé, dont les deux contacts 7, 8 sont pourvus d'un évent de sécurité 9 du type de ceux qui viennent d'être décrits. Une telle batterie peut également être pourvue d'un seul évent disposé autour de l'un ou l'autre des contacts. L'enroulement spiral 2 est formé autour d'une bobine rigide 20 en matériau isolant par exemple en plastique, comprenant un plateau inférieur 22 relié à un plateau supérieur 21 par trois isthmes 23, 24, 25, délimitant des ouvertures 26a, 26c permettant de loger les tiges de connexion 30, aplaties dans leur partie médiane pour être soudées aux électrodes 2a, 2c (non représentées) de l'enroulement spiral 2. Comme on le voit, le plateau supérieur 21 de la bobine 20 forme l'élément isolant contre lequel prend appui l'épaulement du tube d'un évent de sécurité 9.

La conception de l'évent de sécurité selon l'invention associé à une batterie prismatique du type qui vient d'être décrit contribue à la fois à augmenter la sécurité d'emploi et à réduire le coût de fabrication, et peut être adapté à différents types de batteries, sans sortir du cadre de la présente invention.

## Revendications

1. Event de sécurité, sensible à une élévation anormale de température, pour une batterie comprenant un container métallique (1) à l'intérieur duquel sont disposés des matériaux actifs formant respectivement l'anode et la cathode ledit container (1) étant obturé à sa partie supérieure par un capot (4) hermétiquement scellé, séparé des matériaux actifs par un élément isolant (21) et supportant deux contacts (7, 8) reliés électriquement à l'anode et à la cathode par l'intermédiaire de moyens de connexion (5, 6), **caractérisé en ce qu'**au moins un des contacts (7, 8) est formé au moins partiellement par une tige métallique rigide (30), montée avec un jeu annulaire (18) dans un tube (11) dont une partie (11a) de plus petit diamètre traverse l'élément isolant (21) et le capot (4), et dont une partie (11b) de plus grand diamètre vient en appui sur la face interne (21a) de l'élément isolant (21), en ayant son autre extrémité (13) sertie contre la face externe (4b) du couvercle (4) et **en ce que** le jeu (18) formé entre le tube (11) et la tige (30) est obturé par une composition thermofusible (14).

2. Event de sécurité selon la revendication 1, **caractérisé en ce que** le tube (11) forme une douille dont l'épaulement (12) forme une collerette prenant appui sur la face interne (21a) de l'élément isolant 21 et **en ce que** la tige de connexion (30) est prolongée à l'intérieur de la batterie au-delà de l'élément isolant (21) pour former un moyen de connexion sans contact intermédiaire (5, 6) avec les électrodes.

3. Event de sécurité selon la revendication 1, **caractérisé en ce que** la tige de connexion (30) ne s'étend pas au-delà de l'élément isolant (21) et **en ce que** la partie de tube de plus grand diamètre (11b) est prolongée à l'intérieur de la batterie pour former un moyen de connexion (5, 6) avec les électrodes.

4. Event de sécurité selon les revendications 2 ou 3, **caractérisé en ce que** les parties de tige ou de tube prolongées à l'intérieur de la batterie pour former les moyens de connexion sont aplaties ou écrasées.

5. Event de sécurité selon la revendication 1, **caractérisé en ce qu'**une rondelle isolante (15) est disposée sur la face externe (4b) du capot (4) pour servir d'appui à l'extrémité sertie (13) de la douille (11).

6. Event de sécurité selon la revendication 1, **caractérisé en ce que** le couvercle (4) est en outre pourvu d'un évidemment annulaire (16) ouvert vers l'élément isolant (21) pour recevoir un joint (17) comprimé par sertissage entre le capot (4), l'élément isolant (21) et la partie du tube (11a) de plus petit diamètre.

7. Event de sécurité selon les revendications 5 et 6, **caractérisé en ce que** la rondelle isolante (15) et le joint (17) forment une seule pièce.

8. Event de sécurité selon la revendication 1, **caractérisé en ce que** l'élément isolant (21) est rigide et constitue le plateau supérieur d'une bobine (20) ayant un plateau inférieur (22) relié audit plateau supérieur (21) par trois isthmes (23, 24, 25) définissant deux ouvertures (26a, 26c), et supportant un enroulement spiral non circulaire (2) comprenant l'anode et la cathode.

9. Event de sécurité selon la revendication 8 **caractérisé en ce que** les tiges métalliques (30), ou les tubes (11) formant les moyens de connexion (5, 6) traversent la bobine en étant logés dans les ouvertures (26a, 26c) ménagée entre les isthmes (23, 24, 25).

10. Event de sécurité selon la revendication 1, **caractérisé en ce que** la composition thermofusible (14) est un mélange eutectique de métaux ayant un point de fusion compris entre 100°C et 150°C, de préférence 120°C.

11. Batterie pourvue d'un évent de sécurité, sensible à une élévation anormale de température, selon l'une quelconque des revendications 1 à 6.

12. Batterie prismatique pourvue d'un évent de sécurité, sensible à une élévation anormale de température, selon l'une quelconque des revendications 1 à 10.

## Patentansprüche

1. Sicherheitsentlüftung, die auf einen anomalen Temperaturanstieg anspricht, für eine Batterie, die einen Metallbehälter (1) umfaßt, in dem aktive Werkstoffe angeordnet sind, die die Anode bzw. die Kathode bilden, wobei der Behälter (1) in seinem oberen Abschnitt durch eine hermetisch gekapselte Haube (4) verschlossen ist, die von den aktiven Werkstoffen durch ein Isolierelement (21) getrennt ist und zwei Kontakte (7, 8) trägt, die mit der Anode bzw. mit der Kathode über Anschlußmittel (5, 6) elektrisch verbunden sind, **dadurch gekennzeichnet, daß** wenigstens einer der Kontakte (7, 8) wenigstens teilweise durch einen starren Metallstift (30) gebildet ist, der mit ringförmigem Zwischenraum (18) in einem Röhrchen (11) angebracht ist, von dem sich ein Abschnitt (11a) mit kleinerem Durchmesser durch das Isolierelement (21) und die Haube (4) erstreckt und ein Abschnitt (11b) mit größerem Durchmesser auf der inneren Fläche (21a) des Isolierelements (21) abstützt, während sein anderes Ende (13) gegen die äußere Fläche (4b) des Deckels (4) gepreßt ist, und daß der zwischen dem Röhrchen (11) und dem Stift (30) gebildete Zwischenraum (18) durch eine wärmeschmelzbare Verbindung (14) verschlossen ist.

2. Sicherheitsentlüftung nach Anspruch 1, **dadurch gekennzeichnet, daß** das Röhrchen (11) eine Buchse bildet, deren Schulter (12) einen Kragen bildet, der sich auf der inneren Fläche (21a) des Isolierelements (21) abstützt, und daß der Verbindungsstift (30) in den Innenraum der Batterie über das Isolierelement (21) hinaus verlängert ist, um ein zwischenkontaktloses Anschlußelement (5, 6) mit den Elektroden zu bilden.

3. Sicherheitsentlüftung nach Anspruch 1, **dadurch gekennzeichnet, daß** sich der Anschlußstift (30) nicht über das Isolierelement (21) hinaus erstreckt und daß der Abschnitt des Röhrchens mit größerem Durchmesser (11b) in den Innenraum der Batterie verlängert ist, um ein Anschlußmittel (5, 6) mit den Elektroden zu bilden.

4. Sicherheitsentlüftung nach den Ansprüchen 2 oder 3, **dadurch gekennzeichnet, daß** die Abschnitte des Stifts oder des Röhrchens, die in den Innenraum der Batterie verlängert sind, um die Anschlußmittel zu bilden, abgeflacht oder eingedrückt sind.

5. Sicherheitsentlüftung nach Anspruch 1, **dadurch gekennzeichnet, daß** auf der äußeren Fläche (4b) der Haube (4) eine Isolierscheibe (15) angeordnet ist, die der Abstützung auf dem gepreßten Ende (13) der Buchse (11) dient.

6. Sicherheitsentlüftung nach Anspruch 1, **dadurch gekennzeichnet, daß** der Deckel (4) außerdem mit einer ringförmigen Aussparung (16) versehen ist, die zum Isolierelement (21) hin offen ist, um eine durch Quetschen zwischen der Haube (4), dem Isolierelement (21) und dem Abschnitt (11a) des Röhrchens mit dem kleinerem Durchmesser zusammengedrückte Dichtung (17) aufzunehmen.

7. Sicherheitsentlüftung nach den Ansprüchen 5 und 6, **dadurch gekennzeichnet, daß** die Isolierscheibe (15) und die Dichtung (17) einteilig ausgebildet sind.

8. Sicherheitsentlüftung nach Anspruch 1, **dadurch gekennzeichnet, daß** das Isolierelement (21) starr ist und die obere Platte einer Spule (20) bildet, die eine untere Platte (22) aufweist, die mit der oberen Platte (21) über drei schmale Elemente (23, 24, 25) verbunden ist, die zwei Öffnungen (26a, 26c) definieren und eine spiralförmige, nicht kreisförmige Wicklung (2) tragen, die die Anode und die Kathode umfassen.

9. Sicherheitsentlüftung nach Anspruch 8, **dadurch gekennzeichnet, daß** die Metallstifte (30) oder die Röhrchen (11), die die Anschlußmittel (5, 6) bilden, sich durch die Spule erstrecken, wobei sie in den Öffnungen (26a, 26c) untergebracht sind, die zwischen den schmalen Elementen (23, 24, 25) ausgebildet sind.

10. Sicherheitsentlüftung nach Anspruch 1, **dadurch gekennzeichnet, daß** die wärmeschmelzbare Verbindung (14) ein eutektisches Metallgemisch ist, das einen Schmelzpunkt im Bereich von 100°C bis 150°C, vorzugsweise 120°C besitzt.

11. Batterie, die mit einer auf einen anomalen Temperaturanstieg ansprechenden Sicherheitsentlüftung nach einem der Ansprüche 1 bis 6 versehen ist.

12. Prismaförmige Batterie, die mit einer auf einen anomalen Temperaturanstieg ansprechenden Sicherheitsentlüftung nach einem der Ansprüche 1 bis 10 versehen ist.

## Claims

1. Safety vent, sensitive to an abnormal rise in temperature, for a battery including a metal container (1) within which are arranged active materials forming respectively the anode and the cathode, said container (1) being sealed at its upper portion by a hermetically sealed cover (4), separated from the active materials by an insulating element (21) and carrying two contact terminals (7, 8) electrically connected to the anode and the cathode via connection means (5, 6), **characterised in that** at least one of the contact terminals (7, 8) is formed at least partially by a rigid metal rod (30), mounted with an annular clearance (18) in a tube (11) of which one portion (11a) of smaller diameter passes through the insulating element (21) and the cover (4), and of which a portion (11b) of larger diameter rests on the inner face (21a) of the insulating element (21), the other end (13) thereof being crimped onto the outer face (4b) of the cover (4) and **in that** the clearance (18) formed between the tube (11) and the rod (30) is sealed by a thermofusible composition (14).

2. Safety vent according to claim 1, **characterised in that** the tube (11) forms a sleeve whose shoulder (12) forms a flange resting on the inner face (21a) of the insulating element (21) and **in that** the connection rod (30) is extended inside the battery beyond the insulating element (21) to form a connection means without any intermediate contact (5, 6) with the electrodes.

3. Safety vent according to claim 1, **characterised in that** the connection rod (30) does not extend beyond the insulating element (21) and **in that** the portion of tube of greater diameter (11b) is extended inside the battery to form a connection means (5, 6) with the electrodes.

4. Safety vent according to claims 2 or 3, **characterised in that** the portions of rod or tube which extend inside the battery to form the connection means are flattened or squashed.

5. Safety vent according to claim 1, **characterised in that** an insulating washer (15) is arranged on the external face (4b) of the cover (4) to act as support for the crimped end (13) of the sleeve (11).

6. Safety vent according to claim 1, **characterised in that** the cover(4) is further provided with an annular recess (16) which is open in the direction of the insulating element (21) to accommodate a gasket (17) compressed by crimping between the cover (4), the insulating element (21) and the portion of tube (11a) of smallest diameter.

7. Safety vent according to claims 5 and 6, **characterised in that** the insulating washer (15) and the gasket (17) form a single part.

8. Safety vent according to claim 1, **characterised in that** the insulating element (21) is rigid and forms the upper flange of a spool (20) having a lower flange (22) joined to said upper flange (21) by three necks (23, 24, 25) defining two openings (26a, 26c), and supporting a non circular spiral winding (2) including the anode and the cathode.

9. Safety vent according to claim 8, **characterised in that** the metal rods (30), or the tubes (11) forming the connection means (5, 6) pass through the spool and are housed in openings (26a, 26c) arranged between the necks (23, 24, 25).

10. Safety vent according to claim 1, **characterised in that** the thermofusible composition (14) is a eutectic alloys of metals having a melting point comprised between 100°C and 150°C, preferably 120°C.

11. Battery provided with a safety vent, sensitive to an abnormal rise in temperature, according to any one of claims 1 to 6.

12. Prismatic battery provided with a safety vent, sensitive to an abnormal rise in temperature, according to any one of claims 1 to 10.
